# EUROPEAN PATENT APPLICATION

(11) **EP 2 835 727 A1**
(43) Date of publication of application: **11.02.2015**
(21) Application number: 12875692.1
(22) Date of filing: 25.06.2012
(51) Int. Cl.: G06F 3/048

(54) **METHOD FOR PERFORMING BATCH MANAGEMENT ON DESKTOP ICON AND DIGITAL MOBILE DEVICE**

(30) Priority: 25.04.2012 CN 201210125368
(71) Applicant: ZTE Corporation, Shenzhen, Guangdong 518057 (CN)
(72) Inventor: WU, Guofeng, Shenzhen Guangdong 518057 (CN)
(74) Representative: D'Halleweyn, Nele Veerle Trees Gertrudis
(86) International application number: PCT/CN2012/077445
(87) International publication number: WO 2013/159447

(57) **Abstract**

A method for performing batch management on desktop icons and a digital mobile device are provided. The method is applied to the digital mobile device, including: when confirming that a user selects a desktop edition function, setting each icon on a current display interface to be in a check state; after confirming that the user selects at least one of icons, performing batch management on the selected icons according to user instructions. The device includes: an icon information unit configured to set each icon on a current display interface to be in a check state when confirming that the user selects the desktop edition function; and notify an icon operation unit after confirming that the user selects at least one of icons; the icon operation unit is configured to perform batch management on the selected icons according to user instructions after receiving the notification sent by the icon information unit. The abovementioned solution can reduce redundant labor of the user, facilitate the user operation, and improve the user experience.

## Description

### Technical Field

The present invention relates to the digital mobile field, and more particularly, to a method for performing batch management on a desktop icon and a digital mobile device.

### Background of the Invention

In recent years, with the rapid development of digital mobile technology, the method that the digital mobile device interacts with the user via the desktop is more and more common. With the increase of user's using time, more and more shortcut icons of application programs fully occupy the desktop, which makes the desktop look disorganized.

When a user needs to classify and manage the desktop icons on a digital mobile device, the user usually can only perform the operation such as copy, move or delete one icon at a time. This creates a lot of redundant labors for the user, makes the operation become complicated and reduces the experience effect.

### Summary of the Invention

To solve the technical problem, the present invention provides a method for performing batch management on desktop icons and a digital mobile device, to overcome the deficiency that currently, a user can only manage one icon on a mobile digital device individually at a time.

To solve the abovementioned problem, the present invention provides a method for performing batch management on desktop icons, applied to a digital mobile device, comprising:
when confirming that a user selects to perform a desktop edition function, setting each icon on a current display interface to be in a check state; after determining that the user selects at least one of the icons, performing batch processing on the selected icons according to a user instruction.

Preferably,
said performing batch processing on the selected icons according to the user instruction comprises:
performing batch operations, including moving, deleting or copying, on the selected icons according to the user instruction.

Preferably,
said setting each icon on the current display interface to be in the check state comprises:
adding to display one check box within a display area of each icon;
the method further comprises: when determining that the user selects a certain icon, setting the check box corresponding to the icon as a selected state.

Preferably,
said performing batch processing on the selected icons according to the user instruction comprises:
correspondingly modifying attribute information of the selected icons according to the user instruction, and then performing the corresponding batch processing operation.

Accordingly, the present invention further provides a digital mobile device, which comprises:
an icon information unit, configured to: when confirming that a user selects to perform a desktop edition function, set each icon on a current display interface to be in a check state; after determining that the user selects at least one of the icons, notify an icon operation unit for processing;
the icon operation unit, configured to: after receiving the notification sent by the icon information unit, perform batch processing on the selected icons according to the user instruction.

Preferably,
the icon operation unit is configured to: perform batch processing on the selected icons according to the user instruction, comprising:
performing batch operations, including moving, deleting or copying, on the selected icons according to the user instruction.

Preferably,
the icon information unit is configured to: set each icon on the current display interface to be in the check state, comprising:
adding to display one check box within a display area of each icon;
the icon information unit is further configured to: when determining that a user selects a certain icon, set the check box corresponding to the icon as a selected state.

Preferably,
the icon information unit is configured to: after determining that the user selects at least one of the icons, notify the icon operation unit for processing;
the icon information unit is configured to: after determining that the user selects at least one of the icons, accordingly modify attribute information of the selected icons according to the user instruction, and then notify the icon operation unit for processing.

The embodiment of the present invention achieves the purpose of performing batch management on the icons with the method of adding multiple selections of icon for users in the editing state of the desktop management system. With the embodiments of the present invention, the users are allowed to perform batch processing on the shortcuts when managing the multiple-desktop management system, thus reducing the redundant labor of the user, facilitating the user operation and improving the user experience.

### Brief Description of the Drawings

FIG. 1 is a flow chart of a method for performing batch management on desktop icons in accordance with an embodiment of the present invention;
FIG. 2 (a) ~ FIG. 2 (f) are schematic diagrams of operations on desktop icons in accordance with an embodiment of the present invention;
FIG. 3 is a schematic diagram of the structure of a mobile digital device in accordance with an embodiment of the present invention;
FIG. 4 is a flow chart of the specific processing steps in accordance with an embodiment of the present invention.

### Preferred Embodiments of the Present Invention

Hereinafter in conjunction with the accompanying figures, the embodiments of the present invention will be described in detail. It should be noted that, in the case of no conflict, the embodiments of the present application and features in the embodiments may be arbitrarily combined with each other.

The present embodiment provides a method for performing batch management on desktop icons. This method is applicable, but not limited to a desktop or virtual desktop on a digital mobile device. Wherein, the desktop on the digital mobile device comprises a system native desktop as well as a desktop subsequently customized by the developer. The system native desktop refers to a desktop owned by the system when out of the factory; the subsequent developer-customized desktop refers to a desktop having its own features and evolved out by the developer modifying the system. While the virtual desktop refers to a single-desktop or multi-desktop interface invented with a desktop virtualization software. Furthermore, the icons in the present embodiment refer to all the icons which can be presented or stored on the desktop, including but not limited to: links, shortcuts, applications, documents, plug-ins, audio and video files and so on.

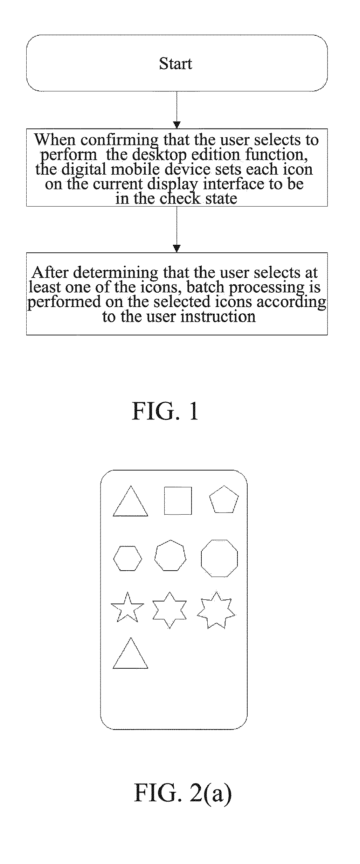

To solve the deficiency that only a single icon on the desktop can be processed at a time, the selection of multiple icons can be used to change the repeat operations on a single icon into a batch operation on multiple icons. As shown in FIG. 1, the desktop icon batch management method comprises: when confirming that the user selects to perform the desktop edition function, the digital mobile device setting each icon on the current display interface to be in the check state; after determining that the user selects at least one of the icons, performing batch processing on the selected icons according to the user instruction. Wherein said processing refers to: moving, deleting, copying and other operations.

In a specific implementation, the abovementioned setting the each icon on the current display interface to be in the check state may refer to: adding to display one check box in the display area of each icon; when determining that the user selects a certain icon, setting the check box as the selected state.

In the following, in combination with the accompanying drawings, the abovementioned embodiments will be described in detail.

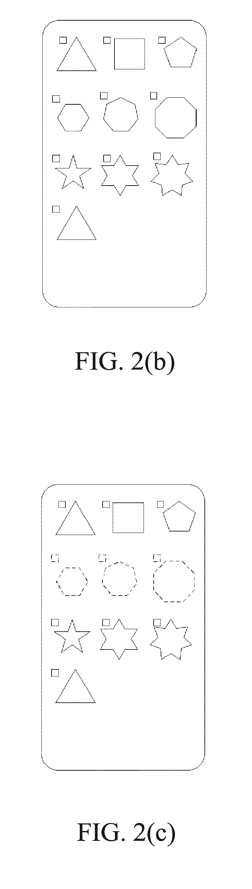

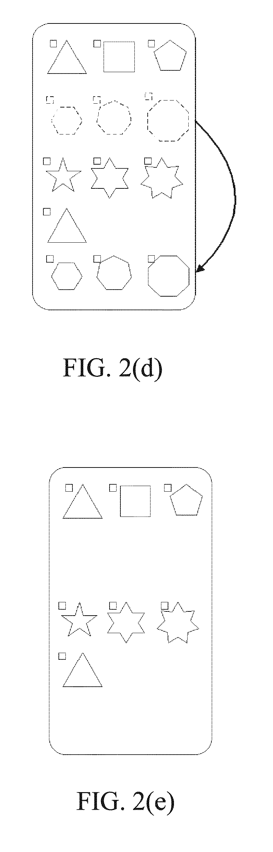

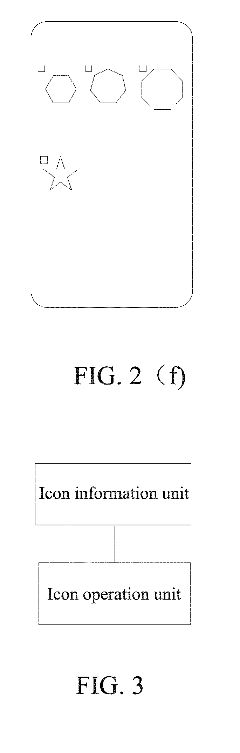

As shown in FIG. 2 (a), there are currently 10 icons on the desktop of a digital mobile device. When the user selects to manage the desktop icons with the menu items, the desktop enters into the editing mode, as shown in FIG. 2 (b), at this moment, a check box is shown in front of each icon on the desktop, indicating that the desktop icons enter into an editable state. When confirming that the user selects multiple icons that need the same operation, the digital mobile device displays the icons selected by the user to be in the selected pattern. Take the desktop shown in FIG. 2 (c) for example, that is, the user selects all the icons in the second row. When confirming that the user selects the moving operation, the selected icons are moved from their original positions (that is, the positions marked by dotted line in FIG. 2 (c)) to the destination position specified by the user, as shown in FIG. 2 (d); when confirming that the user selects the deleting operation, the digital mobile device deletes the selected icons, as shown in FIG. 2 (e). The operations within other desktops or between the desktops are similar, as shown in FIG. 2 (f), the icons in the second row can also be moved to another desktop.

As shown in FIG. 3, the digital mobile device comprises an icon information unit and an icon operation unit. The icon information unit is mainly used to manage the attributes of the icons displayed on the desktop, wherein, the attributes of the icons comprise: display position, display pattern and so on; it is also used to set each icon on the current display interface to be in the check state when confirming that the user selects to perform the desktop edition function; it is further used to notify the icon operation unit for processing after determining that the user selects at least one of the icons; the icon operation unit is used to perform batch processing, such as move, delete, save and so on, on the selected icons according to the user instruction after receiving a notification sent by the icon information unit. These two units cooperate with each other to complete the management of the desktop icons together.

When the user selects to perform a batch operation on the icons on the desktop, the picture information unit correspondingly modifies the attributes of the icons, such as the display position and so on, involved in this operation, and directly presents the final interface to the user, so as to achieve a quick response to the user operations. The picture operation unit can perform the actual implementation of the user operation synchronously or asynchronously, that is, perform the corresponding operations on the selected icons in the background, so as not to affect the user experience due to the specific operation. Even if the operation is interrupted due to special circumstances, the operation can be continued to be performed according to the mark at the next time of entering in.

Meanwhile, the asynchronous operations of the picture information unit and the picture operation unit also simplify the complexity of the program implementation, and increase the modularization and integration of the function implementation.

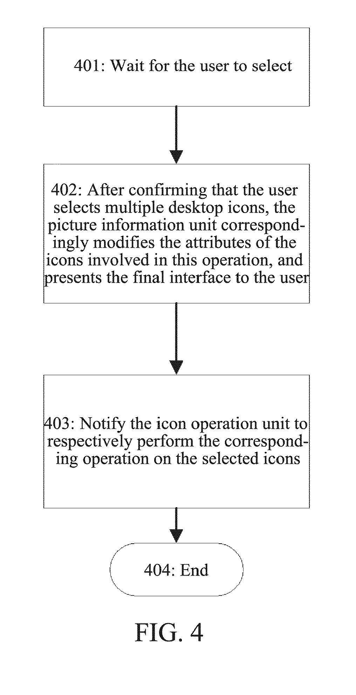

Specifically, as shown in FIG. 4, the desktop icon batch management method comprises the following steps:
step 401, wait for the user to select;
when the user needs to manage the desktop icons, it enters into the desktop management mode. The icon information unit marks the current desktop icons as the to-be-checked pattern. Every time the user selects one icon, the icon information unit changes the pattern corresponding to the icon to the selected pattern.
Step 402, it is confirmed that the user selects multiple desktop icons, and the picture information unit correspondingly modifies the attributes of the icons involved in this operation, and presents the final interface to the user;
Step 403, the icon operation unit is notified to respectively perform the corresponding operation, such as moving or deleting and so on, on the selected icons;
Step 404, this management process ends.

In addition, it needs to be noted that these operations selected by the user include, but not limited to the operations within the local desktop, they also include the operations between the local desktop and other desktops.

This will be understood by those of ordinary skill in the art that all or some of the steps in the abovementioned method can be implemented by programs instructing the related hardware, and the programs may be stored in a computer readable storage medium, such as a read only memory, a magnetic or optical disk. Alternatively, all or some of the steps of the abovementioned embodiment can also be implemented with one or more integrated circuits. Accordingly, each module/unit in the abovementioned embodiment may be realized in the form of hardware or software functional modules. The present invention is not limited to any particular form of the combination of hardware and software.

The above description is only preferred embodiments of the present invention, and is not intended to limit the claims of the present invention. According to the content of the present invention, it may also have a variety of other embodiments, and without departing from the spirit and essence of the present invention, a person skilled in the art can make a variety of corresponding changes and modifications in accordance with the present invention, and any changes, equivalent replacements, and improvements made within the spirit and principles of the present invention should be included within the protection scope of the present invention.

### Industrial Applicability

The embodiment of the present invention achieves the purpose of performing batch management on the icons with the method of adding multiple selections of icon for users in the editing state of the desktop management system. It allows the users to perform batch processing on the shortcuts when managing the multiple-desktop management system, thus reducing the redundant labor of the users, facilitating the user operation and improving the user experience.

## Claims

1. A method for performing batch management on desktop icons, applied to a digital mobile device, comprising:
when confirming that a user selects to perform a desktop edition function, setting each icon on a current display interface to be in a check state; after determining that the user selects at least one of icons, performing batch processing on the selected icons according to a user instruction.

2. The method of claim 1, wherein,
said performing batch processing on the selected icons according to the user instruction comprises:
performing batch operations, including moving, deleting or copying, on the selected icons according to the user instruction.

3. The method of claim 1, wherein,
said setting each icon on the current display interface to be in the check state comprises:
adding to display one check box within a display area of each icon;
the method further comprises: when determining that the user selects a certain icon, setting a check box corresponding to the icon as a selected state.

4. The method of any one of claims 1-3, wherein,
said performing batch processing on the selected icons according to the user instruction comprises:
correspondingly modifying attribute information of the selected icons according to the user instruction, and then performing corresponding batch processing operations.

5. A digital mobile device, comprising:
an icon information unit, configured to: when confirming that a user selects to perform a desktop edition function, set each icon on a current display interface to be in a check state; after determining that the user selects at least one of icons, notify an icon operation unit for processing;
the icon operation unit, configured to: after receiving the notification sent by the icon information unit, perform batch processing on the selected icons according to a user instruction.

6. The device of claim 5, wherein,
the icon operation unit is configured to: perform batch processing on the selected icons according to the user instruction, comprising:
performing batch operations, including moving, deleting or copying, on the selected icons according to the user instruction.

7. The device of claim 5, wherein,
the icon information unit is configured to: set each icon on the current display interface to be in the check state, comprising:
adding to display one check box within a display area of each icon;
the icon information unit is further configured to: when determining that the user selects a certain icon, set a check box corresponding to the icon as a selected state.

8. The device of any one of claims 5-7, wherein,
the icon information unit is configured to: after determining that the user selects at least one of icons, notify the icon operation unit for processing;
the icon information unit is configured to: after determining that the user selects at least one of icons, accordingly modify attribute information of the selected icons according to the user instruction, and then notify the icon operation unit for processing.
